(19) **Europäisches Patentamt**

**European Patent Office**

**Office européen des brevets**

(11) **EP 1 013 520 B1**

(12) **EUROPÄISCHE PATENTSCHRIFT**

(45) Veröffentlichungstag und Bekanntmachung des Hinweises auf die Patenterteilung:
**24.10.2001  Patentblatt 2001/43**

(51) Int Cl.⁷: **B60T 7/22**, B60K 31/00

(21) Anmeldenummer: **99123875.9**

(22) Anmeldetag: **02.12.1999**

(54) **Verfahren und Vorrichtung zur Regelung der Fahrweise eines Kraftfahrzeuges**

Method and device for controlling the operation of a vehicle

Procédé et dispositif de regulation de la conduite d'un véhicule

(84) Benannte Vertragsstaaten:
**DE ES FR GB IT NL SE**

(30) Priorität: **23.12.1998  DE 19859744**

(43) Veröffentlichungstag der Anmeldung:
**28.06.2000  Patentblatt 2000/26**

(73) Patentinhaber: **MAN Nutzfahrzeuge Aktiengesellschaft**
**80976 München (DE)**

(72) Erfinder:
 • **Schiehlen, Joachim, Dr.-Ing.**
  **82110 Germering (DE)**
 • **Schwertberger, Walter, Dipl.-Ing.**
  **82278 Althegnenberg (DE)**
 • **Jung, Christoph, Dipl.-Ing.**
  **85757 Karlsfeld (DE)**
 • **Hipp, Eberhard, Dipl.-Ing.**
  **80798 München (DE)**

(56) Entgegenhaltungen:
  EP-A- 0 453 760    DE-A- 19 712 802
  US-A- 5 752 214    US-A- 5 944 766

 • HIPP E ET AL: "INTELLIGENTE FAHRER-UNTERSTUETZUNG: DER ABSTANDSGEREGELTE TEMPOMAT" INTERNATIONALES VERKEHRSWESEN,DE,TETZLAFF VERLAG, DARMSTADT, Bd. 49, Nr. 7/08, 1. Juli 1997 (1997-07-01), Seiten 403-407, XP000724196 ISSN: 0020-9511
 • PROTZEL P ET AL: "ABSTANDREGELUNG VON FAHRZEUGEN MIT FUZZY CONTROL" FUZZY LOGIC. THEORIE AND PRAXIS. DORDMUNDER FUZZY-TAGE, 7. Juni 1993 (1993-06-07), Seiten 212-221, XP000645972

**Beschreibung**

Die Erfindung betrifft ein Verfahren nach dem Oberbegriff des Anspruches 1 und eine Vorrichtung nach dem Oberbegriff des Anspruches 6.

Aus der DE 42 00 694 A1 ist das Zusammenwirken eines Geschwindigkeits- und Abstandreglers eines Fahrzeuges bekannt.

Aus der Druckschrift, "Internationales Verkehrswesen, DE, Tetzlaff Verlag, Darmstadt (01-07-1997), 49(7/08). 403 - 407", ist für einen Überholvorgang durch Überholhilfen eine kurzfristige Abstandsunterschreitung bei eingeschaltetem ACC angesprochen.

Aus der DE-A-197 12 802 ist ein Sensor zur Ermittlung der Straßeneigung bekannt, mit dessen Signalen der Bremswunsch des Fahrers und somit der Bremsdruck in den Radbremszylindem beeinflussbar ist.

Es ist weiterhin bekannt, dass durch einen abstandsgeregelten Tempomat, wenn der eingestellte Abstand unterschritten wird, eine Bremsung veranlasst wird.

Die Anmelderin bietet in ihrem Fahrzeugprogramm zusätzlich zum Geschwindigkeitsregler einen Bremsomat an, der, wenn eine Überschreitung der eingestellten Geschwindigkeit im Geschwindigkeitsregler auftritt, eine automatische, geregelte Bremsung einleitet.

Der Bremsomat bremst geregelt das Fahrzeug bei Gefällestrecken mittels Bremseinrichtungen, die von ihm nach einem Programm nacheinander, je nach Bedarf und in der entsprechenden Bremswirkung (Motorbremse, Retarder, Betriebsbremse) eingelegt werden, damit die vom Fahrer eingestellte Wunschgeschwindigkeit auch bei Bergabfahrt eingehalten wird.

Im nachfolgenden Text ist mit "Bremse" die Auswahl der Bremsmittel und deren Wirkung durch den Bremsomat gemeint.

Aufgabe der Erfindung ist es, die bekannten Regler so einzusetzen, dass die Fahrweise des Fahrzeuges so gestaltet wird, als würde sie von einem guten Fahrzeugführer durchgeführt werden.

Die Aufgabe wird erfindungsgemäß durch die Merkmale der Ansprüche 1 und 6 gelöst.

Bei den bis heute bekannten Systemen zur Abstands- und Geschwindigkeitsregelung wird bei freier Fahrspur die Wunschgeschwindigkeit genau eingehalten. Bei sich abwechselnden Gefälle- und Steigungsstrecken regeln die genannten Regelsysteme die Geschwindigkeit ständig mit Bremsen und Beschleunigen. Ein Fahrer kann, wenn er ohne aktiviertes Regelsystem fährt, nie so genau seine Wunschgeschwindigkeit halten, aber er würde z. B. gegen Ende einer Gefällestrecke vorzeitig eine Bremsung beenden, um Schwung aus dem Gefälle zu nutzen. Ebenso würde er an kurzen Gefällestrecken (z. B. nach Brücken) keine Bremse einlegen. Dadurch spart er in erster Linie Treibstoff und schont die Reibungsbremsen.

Diese umweltfreundliche Fahrweise wird von den heutigen Regelsystemen nicht nachgebildet.

Zur Lösung der Aufgabe wird erfindungsgemäß ein System aus Geschwindigkeitsregler (GR), Bremsomat (BR) und Abstandsregler (AR) gebildet, wobei für die Signalverarbeitung entweder zwei herkömmliche Abstandsregler (AR1, AR2) oder ein erweiterter Abstandsregler erforderlich ist.

Die bekannten Systeme

a) Geschwindigkeitsregler (GR) und Bremsomat (BR) oder

b) Geschwindigkeitsregler (GR) und Abstandsregler (AR) = Adaptive Cruise Control (ACC)

sind für das erfindungsgemäße Verfahren nicht ausreichend.

Im nachfolgenden Text werden auch die Abkürzungen GR, BR, AR1 und AR2 für die Regler verwendet.

Mit der erfindungsgemäßen Vorrichtung ist es nun möglich, daß mittels Information über die vertikale Straßenkrümmung, die z. B. über Satellit oder von Transpondern an Baken, oder von Streckendaten, die der Bordrechner gespeichert hat, kommen, vorausschauend eine Überschreitung der eingestellten Geschwindigkeit undloder eine Unterschreitung des eingestellten Wunschabstandes zum vorausfahrenden Fahrzeug in gewissen Grenzen durch das System zugelassen wird.

Mit der Information kann am Beginn eines Gefälles die Bremsung durch den Bremsomat oder den Abstandsregler erst dann eingeleitet werden, wenn die Wunschgeschwindigkeit deutlich überschritten bzw. der Wunschabstand deutlich unterschritten wird. Ebenso kann am Ende eines.Gefälles, bei dem die Bremse durch den Bremsomat oder den Abstandsregler angesteuert wird, die Bremsung etwas früher bzw. mehr reduziert werden, so daß am Ende des Gefälles die Wunschgeschwindigkeit gerade deutlich überschritten bzw. der Wunschabstand gerade deutlich unterschritten wird. Auch kann die Bremsung in kurzen und geringen Gefällen überhaupt nicht aktiviert werden, solange die relativen Geschwindigkeits- und Abstandsgrenzen eingehalten werden.

Die Informationsquellen Satellit oder Transponder an Baken (DE 44 11 125 C2) können genaueste Streckendaten liefern, auch z. B. den Steigungs-/Gefälleverlauf einer Straße.

Der Ort des Fahrzeuges läßt sich z. B. mit GPS (Global Positioning System) bestimmen und die Streckendaten aus einer digitalen Karte ablesen, im Prinzip wie sie typischerweise bei Navigationssystemen verwendet werden.

Es ist aber auch möglich, daß Strecken, die öfters vom gleichen Fahrzeug befahren werden, unterstützt durch Signale aus einer Informationsquelle, durch Daten im Bordrechner abgespeichert und wieder abgerufen werden können.

Das nachfolgende Beispiel zeigt das Verhalten des erfindungsgemäßen Verfahrens und der Vorrichtung:

Das Fahrzeug befindet sich in der Ebene und hat kein vorausfahrendes Fahrzeug vor sich. Damit fährt es geschwindigkeitsgeregelt mit $v_{Soll}$. Das Fahrzeug kommt nun von der Ebene in ein Gefälle. Das benötigte Antriebsmoment wird immer geringer, bis es 0% wird. Die Auswahlschaltung MIN erhält vom GR den Wert 0 und vom AR1, der die Höhe des nötigen Antriebsmomentes zur Abstandsregelung angibt, den Wert 100% (kein vorausfahrendes Fahrzeug). Die Auswahlschaltung MIN wählt den kleineren dieser zwei Werte, also 0%, wodurch die Treibstoffzumessung auf 0 zurückgenommen wird. Wenn durch das Gefälle das Fahrzeug schneller wird, läßt die.Regelung erfindungsgemäß $v_{soll}$ + Δv zu. Wird $v_{Soll}$ + Δv geringfügig überschritten, so erhält der Bremsomat ein Signal, daß $v_{Soll}$ +Δv überschritten ist und gibt ein Signal z. B. 2% erforderliches Bremsmoment an die Auswahlschaltung MAX. Weil kein vorausfahrendes Fahrzeug erkannt ist, bleibt von AR1 das Signal 100% an die Auswahlschaltung MIN, die den Wert nicht berücksichtigt. Von AR2, der die Höhe des Bremsmomentes zur Abstandsregelung angibt, geht aus dem gleichen Grund das Signal 0 an die Auswahlschaltung MAX, die den größeren von zwei eingehenden Werten, in diesem Fall 2% Bremsmoment aus der Überschreitung von $v_{Soll}$ + Δv, für die Bremsung zugrunde legt.

Wenn nun ein langsameres vorausfahrendes Fahrzeug durch den Abstandssensor erkannt ist und die Regelung erfindungsgemäß eine Abstandsunterschreitung $d_{Soll}$ - Δd zuläßt, gibt AR2 erst dann ein Signal an. die Auswahlschaltung MAX, wenn $d_{Soll}$ - Δd geringfügig unterschritten wird. Ist dieses Signal größer, als das Signal aus dem Bremsomat, so wird der größere Wert, z. B. 3% Bremsmoment aus dem AR2, für die Bremse zugrunde gelegt. Ein Signal aus dem AR1 an die Auswahlschaltung MIN ist unwirksam, da das Signal 0 aus dem GR vorliegt.

Wird, durch eine Information über die Straßenführung im Gefälle, weder $v_{Soll}$ + Δv noch $d_{Soll}$ - Δd zugelassen, so gelten die Werte $v_{Soll}$ und $d_{Soll}$, die mittels Signalen aus dem BR und/oder AR2, je nach dem, welches das höhere Signal ist, über die Auswahlschaltung MAX an die Bremse ausgegeben und eingehalten werden.

Wenn das Fahrzeug wieder in der Ebene fährt, so fährt es geschwindigkeitsgeregelt mit $v_{Soll}$, wenn kein vorausfahrendes Fahrzeug durch den Abstandsregler erkannt ist. Die Auswahlschaltung MIN erhält dann das Signal vom GR, z. B. erforderliches Antriebsmoment 60%. Vom AR1 erhält die Auswahlschaltung MIN 100% (kein vorausfahrendes Fahrzeug), womit die Auswahlschaltung MIN den kleineren der beiden Werte, also 60% Antriebsmoment, als Regelgröße für die Treibstoffzumessung weitergibt.

Wenn ein vorausfahrendes, z. B. ein geringfügig langsamer fahrendes Fahrzeug, durch den Abstandssensor erkannt ist, so wird die Antriebsleistung geringer sein, als dies bei geschwindigkeitsgeregelter Fahrweise ist. Aus dem AR1 wird dann ein niedrigerer Signalwert, z. B. 55% erforderliches Antriebsmoment, an die Auswahlschaltung MIN gehen, die dann den niedrigeren Wert der eingehenden Signale (60% aus dem GR, 55% aus dem AR1), also 55% erforderliches Antriebsmoment zur Weitergabe auswählt.

Durch die Signale von der Information wird,

a) abhängig vom künftigen Gefälle-/Steigungsverlauf, die Fahrzeuggeschwindigkeit verändert. Vorteil dieser Strategie ist, daß der perfekte Fahrer nahezu nachgebildet wird. So kann bei Beginn eines Gefälles $v_{Soll}$ + Δv zugelassen und im weiteren Gefälleverlauf $v_{Soll}$ eingeregelt werden. Diese Strategie ist vorteilhaft, wenn nacheinander verschiedene Bremseinrichtungen des Fahrzeuges zugeschaltet werden müssen oder im Verlauf des Gefälles abgeschaltet werden können. Zum Ende des Gefälles kann dann wieder $v_{Soll}$ + Δv zugelassen werden,. um Schwung aus dem Gefälle für die Weiterfahrt in der Ebene oder für eine kommende Steigung zu holen,

b) in kürzeren Gefällestrecken Geschwindigkeitserhöhung $v_{Soll}$ + Δv und/oder eine Abstandsverkürzung $d_{Soll}$ - Δd zugelassen,

c) vor Beginn einer Steigungsstrecke eine Geschwindigkeitserhöhung $v_{Soll}$ + Δv und/oder eine Abstandsverringerung $d_{Soll}$ - Δd zugelassen.

Das System ist erweiterbar, so daß noch zusätzliche Verbesserungen in der Fahrweise des Kraftfahrzeuges erreicht werden. Beispielhaft sei hier genannt, daß vor der Scheitellinie von Bergkuppen oder Überführungen über Bahntrassen die Treibstoffeinspritzmenge reduziert oder auf Null gestellt und eine Geschwindigkeitsunterschreitung $v_{Soll}$ - Δv durch das Regelsystem zugelassen wird. Aus dem kommenden Gefälle kann dann wieder Fahrzeuggeschwindigkeit gewonnen und eine erhöhte Fahrzeuggeschwindigkeit $v_{Soll}$ + Δv durch das Regelsystem zugelassen werden. Diese automatische Fahrweise bedarf aber dann eines erhöhten Grades des Ausbaustandes der Straßeninformation.

Der Abstand zu einem vorausfahrenden Fahrzeug muß bei höherer Geschwindigkeit größer und kann bei geringerer Geschwindigkeit kleiner sein.

Bei allen ACC-Einrichtungen ist dem Fahrer die Möglichkeit der individuellen Abstandswahl geboten. Beispielsweise gibt es 3 Modi, die die Wahl der Abstände nach "nah", "mittel" und "weit" ermöglicht. Einen der Modi wählt der Fahrer, z. B. je nach Wetterlage oder Fahrzeugbeladung oder Straßenbeschaffenheit aus und stellt damit indirekt den Wunschabstand $d_{Soll}$ ein.

Als Beispiel für ein Abstandsgesetz sei hier genannt:

$$[m]d_{Soll} = T_z[\text{sec}] \cdot v\,[km/h] \cdot 3{,}6$$

Durch die Abstandsberechnung wird $d_{Soll}$ stets neu vorgegeben, wobei $T_z$ der Zeit-abstand zwischen dem Heck des vorausfahrenden und dem Bug des eigenen Fahrzeuges ist und im Zeitabstand $T_z$ der vom Fahrer gewählte Abstandsmodus enthalten ist.

In dem erfindungsgemäßen Verfahren und der Vorrichtung hat der Abstandsregler immer Vorrang vor den anderen Reglern.

Die Fig. zeigt schematisch ein Ausführungsbeispiel der Erfindung.

Es bedeuten:

GR = Geschwindigkeitsregler (Tempomat),

BR = Geschwindigkeitsregler für die Bremse (Bremsomat),

AR1 = Abstandsregler 1* für Motor

AR2 = Abstandsregler 2* für Bremse

Die vier Regler haben einen gemeinsamen Integralanteil.

*Anmerkung:

Es könnten auch zwei Abstandsregler in einem Gehäuse oder ein erweiterter Abstandsregler mit der entsprechenden Signalverarbeitung und mit den entsprechenden Ein- und Ausgängen sein.

| | |
|---|---|
| MIN = | Auswahlschaltung, das den Minimalwert zweier Werte auswählt, |
| MAX = | Auswahlschaltung, das den Maximalwert zweier Werte auswählt, |
| d = | gemessener Abstand zum vorausfahrenden Fahrzeug, |
| $d_{Soll}$ = | Sollabstand zum vorausfahrenden Fahrzeug, |
| $v_{Tacho}$ = | Istgeschwindigkeit, |
| $v_{Soll}$ = | eingestellte Wunschgeschwindigkeit, |
| 11 Abstandssensor = | Radar, Lidar, mit Objekterkennung, Objektauswahl und Spurzuordnung. Der Sensor liefert den Abstand und die Geschwindigkeit des vorausfahrenden Fahrzeuges, |
| 12 Tacho = | Tachometer, |
| 13 Bedienung = | Tempomatbedienhebel und Abstandswahlschalter, |
| 14 Signal = | Auswertung der Einstellwerte (Geschwindigkeit und Abstand), |
| 15 Abstand = | Abstandsberechnung, errechnet den momentanen Sollabstand $d_{Soll}$, abhängig von der momentanen Fahrzeuggeschwindigkeit und dem Abstandsmodus (z. B. "nah", "mittel", "weit"), den der Fahrer eingestellt hat, |
| 16 $d_{Soll}$ - $\Delta d$ = | Signalveränderung für den Abstand, der sich aus $d_{Soll}$ (=15) ergibt, verringert um eine zulässige Abstandsunterschreitung $\Delta d$, |

| 17 $v_{Soll}$ + $\Delta v$ = | Signalveränderung für eine erhöhte Geschwindigkeit $v_{Soll}$ + $\Delta v$, |
|---|---|
| 18 Motor = | ansteuerbare Elektronik der Treibstoffzumessung oder über den Bordrechner beeinflußbare Treibstoffzumessung, |
| 19 Bremse = | Betriebs- und/oder Dauerbremsen, |
| 20 = | Information über die Straßenführung bzw. den Straßenverlauf über Satellit, Baken am Straßenrand oder über einen Bordrechner, der mit Satellitenunterstützung den Straßenverlauf gespeichert und abrufbar hat, oder über ein dynamisches Rechenmodell des Fahrzeuges und Satellitenunterstützung und/oder einem Sensor für die Bestimmung der vertikalen Straßenkrümmung, |
| 21 = | Signalwert für Bremsmoment (in % von maximal), |
| 22 = | Signalwert für Antriebsmoment (in % von maximal), |
| 23 = | Signalwert für Bremsmoment (in % von maximal), |
| 24 = | Signalwert für Antriebsmoment (in % von maximal). |

Fährt das Fahrzeug in der Ebene geschwindigkeitsgeregelt, so ist $v_{Tacho}$ = $v_{Soll}$ und der Geschwindigkeitsregler GR gibt den Signalwert 24 z. B. 60% Antriebsmoment an die Auswahlschaltung. Bei dieser Fahrweise ist im Normatfall kein vorausfahrendes Fahrzeug durch den Abstandssensor 11 ermittelt. Der Abstandsregler AR1 gibt dann den Signalwert 22, in diesem Fall 100% an die Auswahlschaltung MIN, die dann den niedrigeren Signalwert, hier 60% Antriebsmoment, auswählt.

Wenn der Abstandssensor 11 ein vorausfahrendes Fahrzeug ermittelt, das z. B. eine niedrigere Geschwindigkeit hat, als das eigene, so wird durch den AR1 der geschwindigkeitsabhängige Abstand $d_{Soll}$ eingeregelt, der vom Fahrer indirekt über einen Modus, z. B. "mittel" von den möglichen Modi "nah", "mittel", "weit", gewählt wurde. Für diesen Vorgang und danach gibt der Abstandsregler AR1 ein Signal 22, z. B. 55%, an die Auswahlschaltung MIN. Die Auswahlschaltung MIN wählt das niedrigere zweier Signale (60% Signalwert 24, 55% Signalwert 22) und gibt dieses, in diesem Fall 55%, weiter an z. B. den Bordrechner, zum Verstellen des Antriebsmomentes am Motor 18.

In der Bedienung 13 stellt der Fahrer Wunschgeschwindigkeit $v_{Soll}$ und Wunschabstand $d_{Soll}$ ein. Bei der Einstellung des Wunschabstandes hat er beispielsweise die Wahl, einen Modus aus den Modi "nah", "mittel", "weit" zu wählen.

Die Information 20 ist eine Information über die Straßenführung bzw. den Straßenverlauf, wie er über Satellit von einer digitalen Straßenkarte oder von Baken am Straßenrand oder über einen Bordrechner, der den Straßenverlauf gespeichert und abrufbar hat, kommt. Auch die Datenausgabe von einem Rechenmodell des Fahrzeuges mit Satellitenunterstützung für die Ortsbestimmung ist als Information 20 machbar.

Der Bremsomat BR gibt Signale 23 an die Auswahlschaltung MAX dann, wenn im Gefälle $v_{Soll}$ + $\Delta v$ oder $v_{Soll}$ eingeregelt werden soll. Die Auswahlschaltung MAX wählt aber erst dann das Signal 23 zur Weitergabe an die Bremse aus, wenn Signal 23 größer als Signal 21 aus dem AR2 ist. Dies ist immer dann der Fall, wenn kein vorausfahrendes Fahrzeug durch den Abstandssensor 11 ermittelt ist.

Der Sollabstand $d_{Soll}$ wird vom Fahrer indirekt durch die Wahl eines Modus aus beispielsweise den Modi "nah", "mittel", "weit" gewählt und in der Signalauswertung 14 als Signal an die Abstandsberechnung 15 weitergegeben. Der Sollabstand $d_{Soll}$ wird in der Abstandsberechnung 15 laufend nach z. B. dem Abstandsgesetz

$$[m]d_{Soll} = T_z[sec] \cdot v\,[km/h]\cdot 3,6$$

der momentanen Geschwindigkeit $v_{Tacho}$ angepaßt, wobei $T_z$ der Zeitabstand zwischen dem Heck des vorausfahrenden Fahrzeuges und dem Bug des eigenen Fahrzeuges bedeutet und der vom Fahrer eingestellte Abstandsmodus, den er aus den Modi, z. B. "nah", "mittel", "weit", ausgewählt hat, in dem Zeitabstand $T_z$ enthalten ist.

Wenn der Sollabstand $d_{Soll}$ eingehalten werden soll, so geht aus der Abstandsberechnung 15 ein Signal $d_{Soll}$ an den AR1, der ein Signal 22 an die Auswahlschaltung MIN gibt, die, z. B. über den Bordrechner, die Treibstoffzumessung am Motor 18 beeinflußt. Wenn eine Unterschreitung $d_{Soll}$ - $\Delta d$ des Sollabstandes $d_{Soll}$ durch die Information 20 zulässig ist, so wird in der Signalveränderung 16 der Signalwert von $d_{Soll}$ verändert auf ein neues Signal $d_{Soll}$ - $\Delta d$ und in den AR2 eingegeben. Aufgrund der Information 20 kann auch in der Signalveränderung 16 der Abstand $d_{Soll}$ -

$\Delta$d auf $d_{Soll}$ wieder zurückgenommen werden. Der AR2 formuliert ein Signal 21 an die Auswahlschaltung MAX, das abhängig von der Istgeschwindigkeit $v_{Tacho}$, der Geschwindigkeit $v_{Fremd}$ und dem Istabstand d eines vorausfahrenden Fahrzeuges ist und berücksichtigt noch, ob der Abstand $d_{Soll}$ - $\Delta$d bereits unterschritten ist

Mit der Bedienung 13 wird auch die Sollgeschwindigkeit $v_{Soll}$ eingestellt und in der. Signalauswertung 14 als Signal $v_{Soll}$ an den GR und an die Signalveränderung 17 als Eingangswert weitergegeben. Wenn bei Fahrt in der Ebene kein vorausfahrendes Fahrzeug durch den Abstandssensor 11 ermittelt ist, so fährt das Fahrzeug über den GR und Signalwert 24 geschwindigkeitsgeregelt.

Ist eine Geschwindigkeitserhöhung $v_{Soll}$ + $\Delta$v durch die Information 20 zulässig, so wird das Signal $v_{Soll}$ in der Signalveränderung 17 auf $v_{Soll}$ + $\Delta$v erhöht und an den Bremsomat BR weitergegeben. Der Bremsomat formuliert dann ein Signal 23 an die Auswahlschaltung MAX, wenn die erhöhte Geschwindigkeit $v_{Soll}$ + $\Delta$v überschritten wird. Augrund der Information 20 kann auch in der Signalveränderung 17 die Geschwindiigkeit wieder auf $v_{Soll}$ zurückgenommen werden.

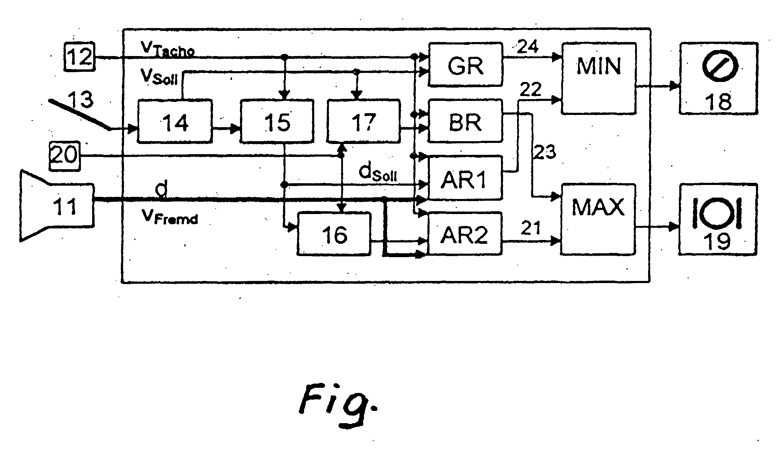

## Patentansprüche

1. Verfahren zur Regelung der Fahrweise eines Kraftfahrzeuges, mit einem Geschwindigkeitsregler und einem Bremsomat oder mit einem Geschwindigkeits- und einem Abstandsregler, mit einem Bordrechner, der in der Lage ist, Daten der Fahrstrecke, die z. B. über Satellit oder von Transpondern an Baken kommen, zu verarbeiten und weiterzugeben, oder mit einem Bordrechner, der Streckendaten gespeichert hat und einem Sensor zur Ermittlung der vertikalen Straßenkrümmung, **dadurch gekennzeichnet, daß** ein Regelsystem aus Geschwindigkeitsregler (GR), Bremsomat (BR) und einem erweiterten oder zwei herkömmlichen Abstandsreglern (AR1, AR2), durch eine Information (20) aus mindestens einer Informationsquelle, eine Überschreitung (+$\Delta$v) der eingestellten Sollgeschwindigkeit ($v_{Soll}$) und/oder eine Unterschreitung ($d_{Soll}$ - $\Delta$d) des Wunschabstandes ($d_{Soll}$) (geschwindigkeitsabhängig) zum vorausfahrenden Fahrzeug zuläßt.

2. Verfahren nach Anspruch 1, **dadurch gekennzeichnet, daß** vor Ende einer längeren Gefällestrecke eine Bremsung, veranlaßt durch den Bremsomat (BR), reduziert oder abgebrochen wird.

3. Verfahren nach Anspruch 1, **dadurch gekennzeichnet, daß** bei kurzen Gefällestrecken überhaupt keine Bremsung veranlaßt wird, wenn ($v_{Soll}$ + $\Delta$v) nicht überschritten und/oder ($d_{Soll}$ - $\Delta$d) nicht unterschritten wird.

4. Verfahren nach Anspruch 1, **dadurch gekennzeichnet, daß** bei längeren Gefällestrecken bei Gefällebeginn eine Geschwindigkeitserhöhung ($V_{Soll}$ + $\Delta$v) und/ oder eine Abstandsverringerung ($d_{Soll}$ - $\Delta$d) zugelassen wird, aber im Verlauf des Gefälles die Sollgeschwindigkeit ($v_{Soll}$) und/oder der Sollabstand ($d_{Soll}$) wieder eingeregelt und gegen Ende des Gefälles wieder eine Geschwindigkeitserhöhung ($v_{Soll}$ + $\Delta$v) und/oder eine Abstandsverringerung ($d_{Soll}$ - $\Delta$d) zugelassen wird.

5. Verfahren nach Anspruch 1, **dadurch gekennzeichnet, daß** vor Beginn einer Steigungsstrecke eine Geschwindigkeitserhöhung ($v_{Soll}$ + $\Delta$v) und/oder eine Abstandsverringerung ($d_{Soll}$ - $\Delta$d) zum vorausfahrenden Fahrzeug zugelassen wird.

6. Vorrichtung zur Regelung der Fahrweise eines Kraftfahrzeuges, mit einem Geschwindigkeitsregler und einem Bremsomat oder mit einem Geschwindigkeitsregler und einem Abstandsregler, mit einem Bordrechner, der in der Lage ist, Daten der Fahrstrecke, die z. B. über Satellit oder von Transpondern an Baken kommen, zu verarbeiten und weiterzugeben, oder mit einem Bordrechner, der Streckendaten gespeichert hat und/oder einem Sensor (12) zur Ermittlung der vertikalen Straßenkrümmung, **dadurch gekennzeichnet, daß** ein System aus Geschwindigkeitsregler (GR), Bremsomat (BR) und einem erweiterten oder zwei herkömmlichen Abstandsreglern (AR1, AR2) gebildet ist, das selbsttätig durch eine Information (20) über Satellit, Transpondern an Baken, oder einen Bordrechner für Streckendaten, Abweichungen von den eingestellten Sollwerten ($v_{Soll}$, $d_{Soll}$) zuläßt.

7. Vorrichtung nach Anspruch 6, **dadurch gekennzeichnet, daß** eine Auswahlschaltung (MIN, MAX) vor oder nach den Reglern (GR, BR, AR1, AR2) geschaltet ist, die über die Auswahl der Mittel (18, 19) für die Änderung des Fahrzustandes des Kraftfahrzeuges entscheidet.

**Claims**

1. A method of controlling the mode of travel of a motor vehicle, with a cruise controller and an automatic downhill braking controller or with a cruise and an anti-collision controller, with an on-board computer which is capable of processing and relaying route data transmitted to traffic beacons e.g. via satellite or from transponders, or with an on-board computer having stored route data and with a sensor to establish the vertical curvature of the road, **characterised in that**, by means of information (20) from at least one information source, a control system comprising cruise controller (GR), automatic downhill braking controller (BR) and one expanded or two conventional anti-collision controllers (AR1, AR2) permits the preset desired speed ($v_{Soll}$) to be exceeded ($+\Delta v$) and/or the desired distance ($d_{Soll}$) from the vehicle travelling in front to be reduced ($d_{Soll} - \Delta d$) (in dependence upon speed),

2. A method according to Claim 1, **characterised in that**, before the end of a relatively long downhill gradient, braking initiated by the automatic downhill braking controller (BR) is reduced or terminated.

3. A method according to Claim 1, **characterised in that**, where there are short downhill gradients, no braking at all is initiated if ($v_{Soll} + \Delta v$) is not exceeded and/or the distance is at least ($d_{Soll} - \Delta d$).

4. A method according to Claim 1, **characterised in that**, where there are relatively long downhill gradients, an increase in speed ($v_{Soll} + \Delta v$) and/or a reduction in distance ($d_{Soll} - \Delta d$) is permitted at the start of the downhill gradient but, over the course thereof, the desired speed ($v_{Soll}$) and/or the desired distance ($d_{Soll}$) are reset and, towards the end of the downhill gradient, an increase in speed ($v_{Soll} + \Delta v$) and/or a reduction in distance ($d_{Soll} - \Delta d$) is again permitted.

5. A method according to Claim 1, **characterised in that**, before the start of an uphill gradient, an increase in speed ($v_{Soll} + \Delta v$) and/or a reduction in the distance ($d_{Soll} - \Delta d$) from the vehicle travelling in front is permitted.

6. A device for controlling the mode of travel of a motor vehicle, with a cruise controller and an automatic downhill braking controller or with a cruise controller and an anti-collision controller, with an on-board computer which is capable of processing and relaying route data transmitted to traffic beacons e.g. via satellite or from transponders, or with an on-board computer having stored route data and/or with a sensor (12) to establish the vertical curvature of the road, **characterised in that** from a cruise controller (GR), automatic downhill braking controller (BR) and one expanded or two conventional anti-collision controllers (AR1, AR2) a system is formed which, by means of information (20) via satellite or from transponders to traffic beacons or an on-board computer for route data, automatically permits deviations from the preset desired values ($v_{Soll}$, $d_{Soll}$).

7. A device according to Claim 6, **characterised in that**, upstream or downstream of the controllers (GR, BR, AR1, AR2), a selection circuit (MIN, MAX) is connected which decides on the selection of the means (18, 19) for modifying the travel status of the motor vehicle.

**Revendications**

1. Procédé de régulation de la conduite d'un véhicule à l'aide d'un régulateur de vitesse et d'un automate de freinage ou d'un régulateur de vitesse et d'un régulateur de distance, comprenant un ordinateur embarqué qui est en mesure de traiter et de transmettre les données relatives à la chaussée par exemple par satellite ou des transpondeurs de borne, ou encore un calculateur embarqué qui mémorise des données de trajet et un capteur pour déterminer la courbure verticale de la chaussée,
**caractérisé en ce qu'**
un système de régulation formé du régulateur de vitesse (GR), de l'automate de freinage (BR) et d'un autre ou de deux régulateurs de distance usuels (AR1, AR2), autorise par une information (20) venant d'au moins une source d'informations, un dépassement ($+\Delta v$) de la vitesse de consigne réglée ($v_{Cons}$) et/ou un dépassement ($d_{Cons} - \Delta d$) de la distance souhaitée ($d_{Cons}$) (dépendant de la vitesse) par rapport au véhicule qui précède.

2. Procédé selon la revendication 1,
**caractérisé en ce qu'**
avant la fin d'un trajet en descente, prolongé, on réduit ou on arrête le freinage par l'automate de freinage (BR).

3. Procédé selon la revendication 1,

**caractérisé en ce que**
pour des descentes courtes, on ne déclenche principalement pas de freinage si ($v_{Cons}$ + $\Delta$v) n'est pas dépassé et/ou si ($d_{Cons}$ - $\Delta$d) n'est pas dépassé vers le bas.

4. Procédé selon la revendication 1,
   **caractérisé en ce que**
   pour des descentes longues, au début de la descente on autorise une augmentation de vitesse ($v_{Cons}$ + $\Delta$v) et/ou une réduction de distance ($d_{Cons}$ - $\Delta$d), mais dans la descente, la vitesse de consigne ($v_{Cons}$) et/ou la distance de consigne ($d_{Cons}$) seront de nouveau régulées et vers la fin de la descente on autorisera de nouveau une augmentation de vitesse ($v_{Cons}$ + $\Delta$v) et/ou une réduction de distance ($d_{Cons}$ - $\Delta$d).

5. Procédé selon la revendication 1,
   **caractérisé en ce qu'**
   avant le début d'une pente montante, on autorise une augmentation de vitesse ($v_{Cons}$ + $\Delta$v) et/ou une réduction de distance ($d_{Cons}$ - $\Delta$d) par rapport au véhicule qui précède.

6. Dispositif de régulation de la conduite d'un véhicule comprenant un régulateur de vitesse et un automate de freinage, ou un régulateur de vitesse et un régulateur de distance, un calculateur embarqué qui est en mesure de traiter des données relatives au trajet par exemple par satellite ou par des transpondeurs équipant des bornes, ou un calculateur embarqué qui contient en mémoire les données du trajet et/ou un capteur (12) pour déterminer la courbure verticale de la chaussée,
   **caractérisé par**
   un système composé du régulateur de vitesse (GR), de l'automate de freinage (BR) et d'un autre ou de deux régulateurs de distance (AR1, AR2), qui, automatiquement par une information (20) par satellite, transpondeur sur les bornes ou calculateur embarqué pour des données du trajet, autorise des déviations par rapport aux valeurs de consigne réglées ($v_{Cons}$, $d_{Cons}$).

7. Dispositif selon la revendication 6,
   **caractérisé par**
   un sélecteur (MIN, MAX) en amont ou en aval des régulateurs (GR, BR, AR1, AR2) qui décide du choix des moyens (18, 19) pour modifier l'état de conduite du véhicule.

Fig.

EP 1 013 520 B1